# EUROPEAN PATENT APPLICATION

(11) **EP 4 832 242 A1**
(43) Date of publication of application: **28.10.2026**
(21) Application number: 24915079.8
(22) Date of filing: 10.12.2024
(51) Int. Cl.: H01P 7/10

(54) **RESONATOR, FILTER DEVICE, AND BASE STATION**

(30) Priority: 02.01.2024 CN 202410001378
(71) Applicant: Huawei Technologies Co., Ltd., Shenzhen, Guangdong 518129 (CN)
(72) Inventor: HE, Zhikang, Shenzhen, Guangdong 518129 (CN); SHI, Jing, Shenzhen, Guangdong 518129 (CN); ZHENG, Qingkuo, Shenzhen, Guangdong 518129 (CN); ZHANG, Hongze, Shenzhen, Guangdong 518129 (CN)
(74) Representative: Maiwald GmbH
(86) International application number: PCT/CN2024/138117
(87) International publication number: WO 2025/145864

(57) **Abstract**

This application, relating to the field of communication technologies, provides a resonator, a filter device, and a base station, to resolve problems of a low Q factor and a low power capacity of the resonator. The resonator provided in this application includes a first dielectric body, a conductive layer, and a second dielectric body. The first dielectric body is made of a first dielectric material, and the second dielectric body is made of a second dielectric material. The conductive layer covers an outer surface of the first dielectric body. The conductive layer includes at least one notch, and the at least one notch is used to adjust a resonant frequency of the dielectric resonator. The second dielectric body covers at least a part of a first notch, where the first notch is one of the at least one notch. A relative dielectric constant of the first dielectric material is greater than a relative dielectric constant of the second dielectric material. Arranging the second dielectric body that covers the notch can adjust the resonant frequency of the resonator, and allow the resonator to have a desired Q factor and power capacity.

## Description

### CROSS-REFERENCE TO RELATED APPLICATIONS

This application claims priority to Chinese Patent Application No. 202410001378.7, filed with the China National Intellectual Property Administration on January 2, 2024 and entitled "RESONATOR, FILTER DEVICE, AND BASE STATION", which is incorporated herein by reference in its entirety.

### TECHNICAL FIELD

This application relates to the field of communication technologies, and in particular, to a resonator, a filter device, and a base station.

### BACKGROUND

A filter is an important component of a wireless base station device. As a wireless communication base station device develops towards multi-channel and high integration, there is an increasingly strong demand for miniaturization, high performance, and high power of filters. Among such filters, dielectric filters have attracted increasing attention due to their advantages of miniaturization and high performance,.

A dielectric filter includes a dielectric resonator, and the dielectric resonator is a resonator made of a low-loss material (for example, ceramic) having a high relative dielectric constant. However, currently, the dielectric resonator mainly adjusts a resonant frequency by providing a notch at a conductive layer, which increases the loss of the dielectric resonator (reduces the Q factor) and reduces a power capacity of the dielectric resonator. Therefore, the wide application of the dielectric resonator is restricted.

### SUMMARY

This application provides a resonator with a small loss and a large power capacity, a filter device, and a base station.

According to a first aspect, an embodiment of this application provides a resonator. The resonator includes a first dielectric body, a conductive layer, and a second dielectric body. The first dielectric body is made of a first dielectric material, and the second dielectric body is made of a second dielectric material. The conductive layer covers an outer surface of the first dielectric body. The conductive layer includes at least one notch, and the at least one notch is used to adjust a resonant frequency of the dielectric resonator. In addition, in this application, the second dielectric body covers at least a part of a first notch, where the first notch is one of the at least one notch. To be specific, when the conductive layer includes one notch, the second dielectric body may cover a part of the notch, or completely cover the notch, and the second dielectric body is in contact with the conductive layer. When the conductive layer includes two or more notches, for any notch, the second dielectric body may cover a part of the notch or completely cover the notch. In addition, the second dielectric body may alternatively not cover some notches. A relative dielectric constant of the first dielectric material is greater than a relative dielectric constant of the second dielectric material. Arranging the second dielectric body can adjust the resonant frequency of the resonator, and allow the resonator to have a desired Q factor and power capacity.

During specific arrangement, the relative dielectric constant of the first dielectric material may be greater than or equal to 8, to implement a miniaturization design of the resonator.

The relative dielectric constant of the second dielectric material may be less than or equal to 4.5, to reduce an impact degree of the second dielectric body on a resonant frequency of a resonant unit.

In an example, a dielectric strength of the second dielectric material may be greater than or equal to 33 kV/cm, to increase a power capacity of a dielectric resonant unit.

In an example, the resonator may further include a shielding layer, and the shielding layer covers at least a part of an outer surface of the second dielectric body. In other words, the shielding layer may cover a part of the outer surface of the second dielectric body, or may completely cover the outer surface of the second dielectric body. The outer surface of the second dielectric body refers to a surface that is of the second dielectric body and that is exposed to an outside when no shielding layer is arranged. In addition, the outer surface of the second dielectric body does not include a surface that is of the second dielectric body and that is in contact with the first dielectric body and the conductive layer. Arranging the shielding layer can effectively prevent or reduce electromagnetic signal leakage from the resonator.

In terms of physical form, the second dielectric body may be any one of a solid, a flexible body, a liquid, a gas, or a powder; or the second dielectric body may be a combination of at least two of a solid, a flexible body, a liquid, a gas, or a powder.

In an example, the resonator may further include a support, and the support is configured to fixedly connect the shielding layer and the conductive layer. This ensures structural stability of the entire resonator. Particularly, when the second dielectric body includes the flexible body, the liquid, the gas, or the powder, the second dielectric body may have poor structural stability, and the shielding layer cannot be effectively supported. Therefore, arranging the support can effectively improve stability of connections between the shielding layer and the first dielectric body and between the shielding layer and the conductive layer, and can further effectively improve flexibility of material selection of the second dielectric body. Certainly, when the second dielectric body is the solid, the resonator may include the support or may not include the support.

In an example, the outer surface of the first dielectric body includes a groove or a through hole, and the notch is provided in the groove or the through hole. The second dielectric body covers at least a part of the groove or the through hole. In other words, in terms of a structure form, the first dielectric body may have a plurality of possibilities, and has desirable flexibility.

In an example, the outer surface of the second dielectric body is provided with a groove extending to the notch. In other words, the second dielectric body may not completely cover the notch.

In an example, the second dielectric body further covers at least a part of the conductive layer. In other words, the second dielectric body may cover a region outside the notch in the conductive layer, and can effectively protect the conductive layer.

According to a second aspect, this application further provides a filter device, including an input port, an output port, and at least one resonator. The at least one resonator is in signal connection with the input port and the output port. A signal may be transmitted from the input port to the filter device, and the signal is processed and then output through the output port.

In the filter device provided in this application, the foregoing resonator is used, to effectively reduce a loss of the filter device, increase a power capacity, and further reduce electromagnetic leakage, thereby helping improve performance of the filter device.

During specific application, the filter device may be a filter, a multiplexer, or the like. A specific type of the filter device is not limited in this application.

During specific arrangement, when the filter device includes a plurality of resonators, the filter device may further include a coupling structure, and the plurality of resonators may be coupled through the coupling structure.

According to a third aspect, this application further provides a base station, including a radio frequency circuit and the foregoing filter device. The filter device is communicatively connected to the radio frequency circuit. The filter device may perform processing such as filtering on a signal in the radio frequency circuit. The foregoing filter device is used, so that the base station can have a smaller loss and a higher power bearing capacity, and operation performance of the base station can be improved.

The base station mentioned in this application refers to an apparatus that directly communicates with user equipment through a radio channel. The base station may include a macro base station, a micro base station, a relay station, an access point, a remote radio unit, or the like in various forms. In systems using different radio access technologies, names of devices having a base station function may be different. In this application, the foregoing apparatuses that directly communicate with the user equipment through the radio channel are collectively referred to as the base station.

A specific type of the base station and a function implemented by the base station are not specifically limited in this application. In addition, the resonator and the filter device provided in embodiments of this application may be further used in another apparatus or scenario in which the resonator and the filter device need to be used.

### BRIEF DESCRIPTION OF DRAWINGS

FIG. 1 is a diagram of a three-dimensional structure of a conventional resonator according to an embodiment of this application;
FIG. 2 is a diagram of a cross-sectional structure in an A-A direction in FIG. 1;
FIG. 3 is a diagram of a cross-sectional structure of another conventional resonator according to an embodiment of this application;
FIG. 4 is a diagram of a three-dimensional structure of a resonator according to an embodiment of this application;
FIG. 5 is a diagram of a cross-sectional structure in a B-B direction in FIG. 4;
FIG. 6 is a diagram of a cross-sectional structure of another resonator according to an embodiment of this application;
FIG. 7 is a diagram of a cross-sectional structure of another resonator according to an embodiment of this application;
FIG. 8 is a diagram of a cross-sectional structure of another resonator according to an embodiment of this application;
FIG. 9 is a diagram of a cross-sectional structure of another resonator according to an embodiment of this application;
FIG. 10 is a diagram of a cross-sectional structure of another resonator according to an embodiment of this application;
FIG. 11 is a diagram of a cross-sectional structure of another resonator according to an embodiment of this application;
FIG. 12 is a diagram of a cross-sectional structure of another resonator according to an embodiment of this application;
FIG. 13 is a diagram of a cross-sectional structure of another resonator according to an embodiment of this application;
FIG. 14 is a diagram of a cross-sectional structure of another resonator according to an embodiment of this application;
FIG. 15 is a diagram of a cross-sectional structure of another resonator according to an embodiment of this application;
FIG. 16 is a diagram of a three-dimensional structure of a first dielectric body covered by a conductive layer according to an embodiment of this application;
FIG. 17 is a diagram of a cross-sectional structure in a C-C direction in FIG. 16;
FIG. 18 is a diagram of a cross-sectional structure of another resonator according to an embodiment of this application;
FIG. 19 is a diagram of a cross-sectional structure of another resonator according to an embodiment of this application;
FIG. 20 is a diagram of a cross-sectional structure of another resonator according to an embodiment of this application;
FIG. 21 is a diagram of a three-dimensional structure of a first dielectric body covered by a conductive layer according to an embodiment of this application;
FIG. 22 is a diagram of a cross-sectional structure in a D-D direction in FIG. 21;
FIG. 23 is a diagram of a cross-sectional structure of another resonator according to an embodiment of this application;
FIG. 24 is a diagram of a cross-sectional structure of another resonator according to an embodiment of this application;
FIG. 25 is a diagram of a cross-sectional structure of another resonator according to an embodiment of this application; and
FIG. 26 is a diagram of a structure of a filter device according to an embodiment of this application.

### DESCRIPTION OF EMBODIMENTS

To make objectives, technical solutions, and advantages of this application clearer, this application is further described in detail below with reference to the accompanying drawings.

For ease of understanding of a resonator provided in embodiments of this application, an application scenario of the resonator is first described below.

The resonator provided in embodiments of this application is specifically a dielectric resonator. The dielectric resonator is an electronic element that generates a resonant frequency, and mainly has a frequency control function. The dielectric resonator is a resonator made of a material (for example, ceramic) with a low loss and a high relative dielectric constant, and generally has a rectangular structure or a cylindrical structure. A surface of the dielectric resonator is coated with a conductive material, and total internal reflection is repeatedly performed on an electromagnetic wave in a dielectric, to form a resonant structure in the dielectric. The dielectric resonator is widely used in communication fields such as a wireless base station, a navigation system, and satellite communication, by virtue of advantages such as a high quality factor, a low insertion loss, a small size, and light weight.

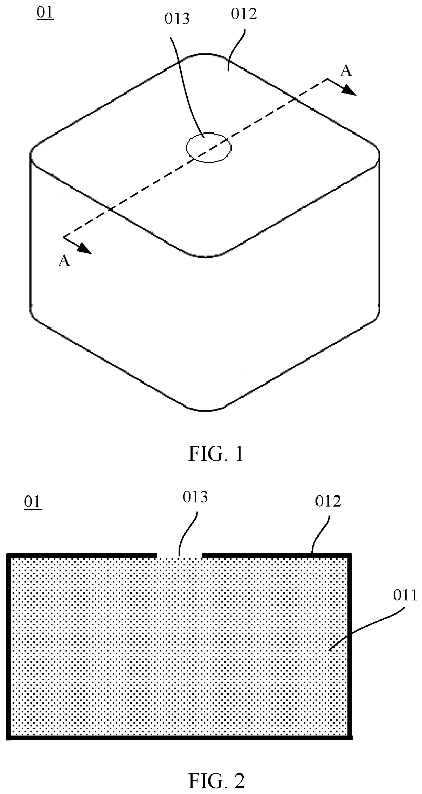

As shown in FIG. 1 and FIG. 2, currently, in a commonly used resonator 01, the resonator 01 includes a dielectric body 01 in a square shape and a conductive layer 012 that covers a surface of the dielectric body 011. The conductive layer 012 is provided with a notch 013 (that is, a non-conductive region), and the notch 013 extends through the conductive layer 012 in a thickness direction. During actual application, parameters such as a quantity, shapes, and areas of notches 013 may be properly set to adjust a resonant frequency of the resonator 01.

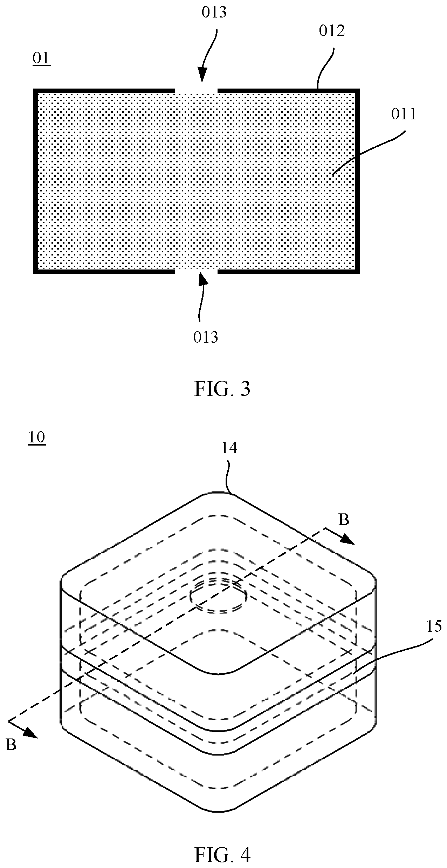

For example, as shown in FIG. 3, in another example provided in this application, the conductive layer 012 is provided with two notches 013, and the two notches 013 are respectively arranged on two opposite surfaces of the conductive layer 012. Parameters such as shapes and areas of the two notches 013 are properly set to adjust the resonant frequency of the resonator 01.

In actual use, both a conductive region and the non-conductive region (that is, the notch 013) of the conductive layer 012 are exposed to an external environment, causing the resonator 01 to have a low Q factor, and reducing a power capacity of the resonator 01.

Therefore, this application provides a resonator having a high Q factor and a high power capacity.

To make the objectives, the technical solutions, and the advantages of this application clearer, this application is further described in detail below with reference to the accompanying drawings and specific embodiments.

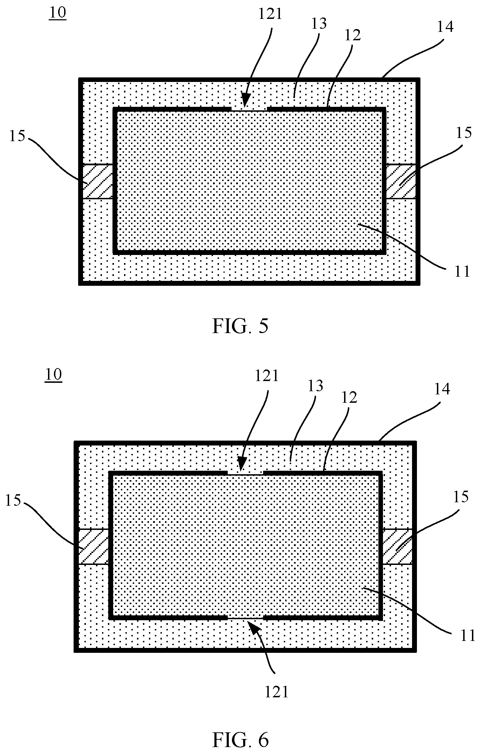

As shown in FIG. 4 and FIG. 5, in an example provided in this application, a resonator 10 includes a first dielectric body 11, a conductive layer 12, and a second dielectric body 13. The first dielectric body 11 is made of a first dielectric material, and the second dielectric body 13 is made of a second dielectric material. The conductive layer 12 covers an outer surface of the first dielectric body 11, the second dielectric body 13 covers a notch 121, and the second dielectric body 13 is in contact with the conductive layer 12. A relative dielectric constant of the first dielectric material is greater than a relative dielectric constant of the second dielectric material. The conductive layer 12 includes the notch 121, and the notch 121 is used to adjust a resonant frequency of the dielectric resonator 10.

The notch 121 may also be considered as a non-conductive region in the conductive layer 12. During actual application, the resonant frequency of the resonator 10 may be adjusted by adjusting parameters such as a shape and an area of the notch 121. In addition, in the example provided in this application, the second dielectric body 13 covers the notch 121, and the relative dielectric constant of the first dielectric material is greater than the relative dielectric constant of the second dielectric material.

In the example provided in this application, arranging the second dielectric body 13 can effectively reduce a surface loss of the resonator 10 and increase the Q factor of the resonator 10.

It should be noted that a power capacity of the resonator 10 is a maximum power that can be borne by the resonator 10. Generally, a smaller area of the notch 121 in the conductive layer 12 indicates a larger power capacity of the resonator 10. However, during actual application, when the notch 121 is exposed to an external environment, it is not conducive to ensuring the power capacity and operation reliability of the resonator 10. In the example provided in this application, the second dielectric body 13 covers the notch 121, so that the power capacity and the reliability of the resonator 10 can be effectively improved. In addition, at the notch 121, a strong reflection interface may be formed between the first dielectric body 11 and the second dielectric body 13, and the strong reflection interface may confine a magnetic field, to reduce energy leakage from the first dielectric body 11, thereby reducing the surface loss of the resonator 10 and increasing the Q factor of the resonator 10. The Q factor is also referred to as a quality factor, which is a dimensionless unit for measuring the performance of the resonator 10. In short, a higher Q factor of the resonator 10 indicates a lower loss of the resonator 10.

In addition, in the example provided in this application, the resonator 10 further includes a shielding layer 14. The shielding layer 14 covers an outer surface of the second dielectric body 13. Arranging the shielding layer 14 can effectively prevent or reduce electromagnetic signal leakage from the resonator 10 and improve shielding performance of the resonator 10. During specific arrangement, the shielding layer 14 may be made of a material with desired conductivity, such as silver, copper, or aluminum. In some examples, the shielding layer 14 may be of a metal housing structure with desired structural strength. During specific implementation, a material and a structure type of the shielding layer 14 may be properly selected depending on actual requirements. Details are not described herein.

It should be noted that the outer surface of the second dielectric body 13 refers to an entire exposed outer surface of the second dielectric body 13, and does not include a surface that is of the second dielectric body 13 and that is in contact with the first dielectric body 11 and the conductive layer 12. When the shielding layer 14 is specifically arranged, the shielding layer 14 may completely cover the outer surface of the second dielectric body 13, or may cover a part of the outer surface of the second dielectric body 13. Alternatively, in some examples, the shielding layer 14 may be omitted.

In addition, in the example provided in this application, the resonator 10 further includes a support 15. The support 15 is configured to fixedly connect the conductive layer 12 and the shielding layer 14. The support 15 is arranged, so that connection stability between the conductive layer 12 and the shielding layer 14 is effectively ensured, thereby improving structural stability of the entire resonator 10. In addition, during specific application, the support 15 may be a rectangular block, or may be in an annular shape. Alternatively, it may be understood that the dielectric resonator 10 may include one support 15, or may include two or more supports 15. In general, during actual application, the conductive layer 12 and the shielding layer 14 can be fixedly connected through the support 15. Structure shapes, arrangement positions, and a quantity of supports 15 may be properly set depending on actual requirements. Details are not described herein.

During specific arrangement, the conductive layer 12 and the shielding layer 14 may alternatively be connected through the second dielectric body 13, that is, the support 15 may be omitted.

During actual application, specific materials of the first dielectric body 11, the second dielectric body 13, and the conductive layer 12 may be variable.

For example, the first dielectric body 11 may be made of a first dielectric material with a high relative dielectric constant, such as ceramic. The specific relative dielectric constant of the first dielectric material may be any value greater than or equal to 8. Alternatively, during actual application, the relative dielectric constant of the first dielectric material may be any value less than 8 and greater than the relative dielectric constant of the second dielectric material.

The second dielectric body 13 may be made of a second dielectric material with a specific relative dielectric constant. The specific relative dielectric constant of the second dielectric material may be any value less than or equal to 4.5.

The conductive layer 12 and the shielding layer 14 may be made of materials with desired conductivity, such as silver, copper, or aluminum.

It may be understood that, during actual application, specific materials and relative dielectric constants of the first dielectric material, the second dielectric material, the conductive layer 12, and the shielding layer 14 may be properly set depending on actual requirements.

In addition, in an example provided in this application, the second dielectric body 13 may alternatively be made of a material with a large dielectric strength. During specific arrangement, a dielectric strength of the second dielectric material may be any value greater than or equal to 33 kV/cm. During actual application, the specific material and the dielectric strength of the second dielectric material may be properly set depending on actual requirements. Details are not described herein.

In addition, in terms of physical form, the second dielectric body 13 may be any one of a solid, a flexible body, a liquid, a gas, or a powder, or may be a combination of at least two of a solid, a flexible body, a liquid, a gas, or a powder. Specifically, the second dielectric body 13 may be any one of a pure solid, a flexible body, a liquid, a gas, or a powder. When the second dielectric body 13 is any one of the pure solid, the flexible body, the liquid, the gas, or the powder, the second dielectric body 13 may be made of one second dielectric material, or may be made of a mixture of two or more different second dielectric materials. Alternatively, the second dielectric body 13 may be a combination of the solid and the flexible body. Alternatively, the second dielectric body 13 may be a combination of the solid, the flexible body, and the liquid. Alternatively, the second dielectric body 13 may be a combination of the solid, the flexible body, the liquid, and the gas. Alternatively, the second dielectric body 13 may be a combination of the solid, the flexible body, the liquid, the gas, and the powder. In summary, in terms of physical form, the second dielectric body 13 may be any one or a combination of at least two of the solid, the flexible body, the liquid, the gas, or the powder.

It should be noted that when the second dielectric body 13 is the flexible body, the liquid, the gas, or the powder, the second dielectric body 13 has poor structural stability. Therefore, in some examples, structural stability of the entire resonator 10 may be ensured through the foregoing auxiliary structure such as the support 15. Certainly, when the second dielectric body 13 is made of a material with desired structural stability, such as the solid, the resonator 10 may alternatively include the foregoing support 15.

It should be noted that, in the examples provided in FIG. 4 and FIG. 5, the conductive layer 12 is provided with one notch 121, and the second dielectric body 13 completely covers the notch 121. However, in another example, the conductive layer 12 may alternatively include two or more notches 121. The second dielectric body 13 may cover all the notches 121, or may cover at least one notch 121. Alternatively, the second dielectric body 13 may cover at least a part of one notch 121. In addition, the outer surface of the first dielectric body 11 refers to an entire exposed outer surface of the first dielectric body 11.

For example, as shown in FIG. 6, in another example provided in this application, the conductive layer 12 is provided with two notches 121, and the two notches 121 are respectively provided on two opposite surfaces of the conductive layer 12.

It may be understood that, in another example, the conductive layer 12 may alternatively include three or more notches 121. When the conductive layer 12 includes a plurality of notches 121, all the notches 121 may be provided in the conductive layer 12 on a same side surface of the first dielectric body 11, or may be provided on different side surfaces of the first dielectric body 11. In other words, the conductive layer 12 on one side surface of the first dielectric body 11 may not be provided with the notch 121, or may be provided with at least one notch 121.

In addition, during actual application, a shape of the notch 121 may be a circle, an ellipse, or a polygon such as a rectangle, or may be another irregular shape. During specific arrangement, a shape of a cross section of the notch 121 may be properly set depending on actual requirements. Details are not described herein.

In addition, in the examples provided in FIG. 4 to FIG. 6, the second dielectric body 13 wraps an outer surface of the conductive layer 12. In other words, both the first dielectric body 11 and the conductive layer 12 are wrapped by the second dielectric body 13.

In another example, the second dielectric body 13 may alternatively cover a part of an outer surface of the conductive layer 12.

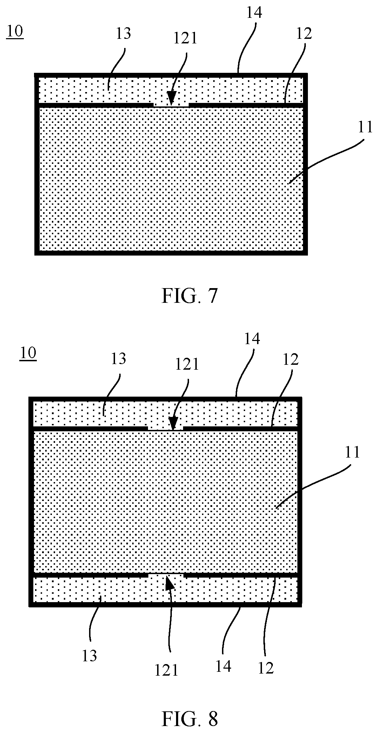

For example, as shown in FIG. 7, in another example provided in this application, the second dielectric body 13 not only completely covers the notch 121, but also covers the conductive layer 12 on a plane on which the notch 121 is provided. After the second dielectric body 13 covers the conductive layer 12, a protection effect of the conductive layer 12 can be improved.

During specific arrangement, materials of different regions of the second dielectric body 13 may be the same, to improve convenience during manufacturing. Alternatively, a part of regions of the second dielectric body 13 that covers the notch 121 uses a material with a high relative dielectric constant and a high dielectric strength, and another part of regions of the second dielectric body 13 may use another material, so that costs of the second dielectric body 13 can be reduced.

Alternatively, as shown in FIG. 8, in another example provided in this application, the conductive layer 12 includes two notches 121. The second dielectric body 13 includes two parts. A part of the second dielectric body 13 completely covers one of the notches 121 and the conductive layer 12 on a plane on which the notch 121 is provided. The other part of the second dielectric body 13 covers the other notch 121 and the conductive layer 12 on a plane on which the notch 121 is provided.

Alternatively, in an example, when the conductive layer 12 includes a plurality of notches 121, the second dielectric body 13 may cover only one notch 121.

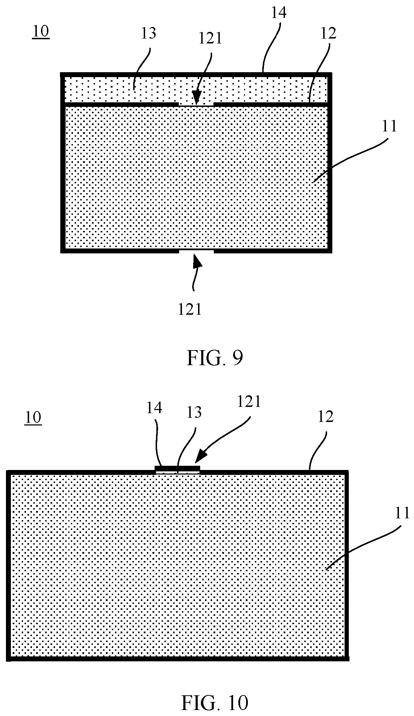

For example, as shown in FIG. 9, in another example provided in this application, the second dielectric body 13 completely covers only one of the notches 121 and the conductive layer 12 on a plane on which the notch 121 is provided.

In addition, in the examples shown in FIG. 7 to FIG. 9, the second dielectric body 13 not only covers the notch 121, but also covers the conductive layer 12 on the plane on which the notch 121 is provided. In another example, the second dielectric body 13 may cover only the notch 121 but not the conductive layer 12.

For example, as shown in FIG. 10, in another example provided in this application, the second dielectric body 13 covers only the notch 121, and the shielding layer 14 completely covers the second dielectric body 13.

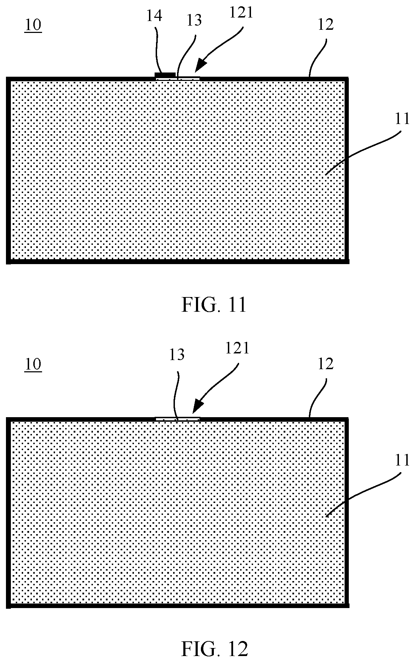

Alternatively, as shown in FIG. 11, in another example provided in this application, the second dielectric body 13 covers only the notch 121, the shielding layer 14 covers a part of the second dielectric body 13, and the second dielectric body 13 has an exposed region.

Alternatively, with reference to FIG. 11 and FIG. 12, in an example provided in FIG. 12, the second dielectric body 13 covers only the notch 121, and the shielding layer 14 may be omitted.

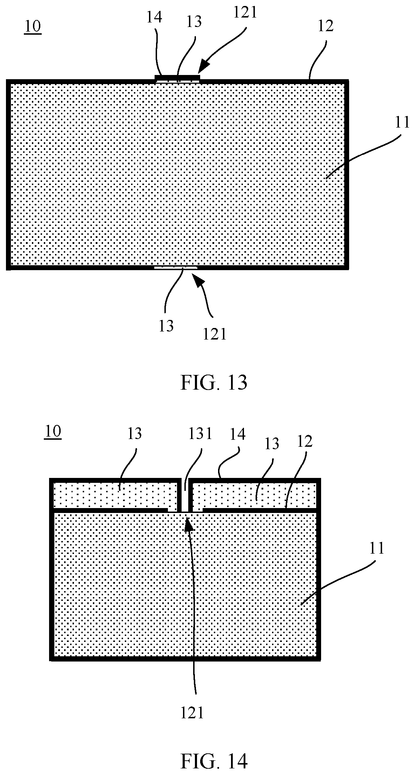

Alternatively, as shown in FIG. 13, in another example provided in this application, the conductive layer 12 includes two notches 121. One notch 121 (for example, a notch 121 on an upper side in FIG. 13) is covered by the second dielectric body 13, and the outer surface of the second dielectric body 13 is covered by the shielding layer 14. The other notch 121 (for example, a notch 121 on a lower side in FIG. 13) is covered only with the second dielectric body 13, and the shielding layer 14 is not covered on the outer surface of the second dielectric body 13. It should be noted that, in the example provided in FIG. 13, the shielding layer 14 completely covers the second dielectric body 13 on the upper side. In another example, only a part of the second dielectric body 13 on the upper side may be covered by the shielding layer 14.

It should be noted that, when the shielding layer 14 does not completely cover the outer surface of the second dielectric body 13, a small amount of magnetic leakage may occur in a region that is not covered by the shielding layer 14, but this can still effectively reduce the magnetic leakage of the resonator 10. In other words, compared with a case in which no shielding layer 14 is arranged, in this case, even if the shielding layer 14 does not completely cover the entire outer surface of the second dielectric body 13, the magnetic leakage in the resonator 10 can still be effectively reduced.

In addition, in the examples shown in FIG. 10 to FIG. 13, the second dielectric body 13 completely covers the notch 121. However, in another example, the second dielectric body 13 may alternatively cover a part of the notch 121.

For example, as shown in FIG. 14, in another example provided in this application, the conductive layer 12 includes one notch 121, and the second dielectric body 13 covers a part of the notch 121. Alternatively, it may be understood that the outer surface of the second dielectric body 13 is provided with a groove 131 extending to the notch 121. During specific arrangement, along a depth direction of the groove 131, cross sections of the groove 131 may be approximately the same, or may be variable.

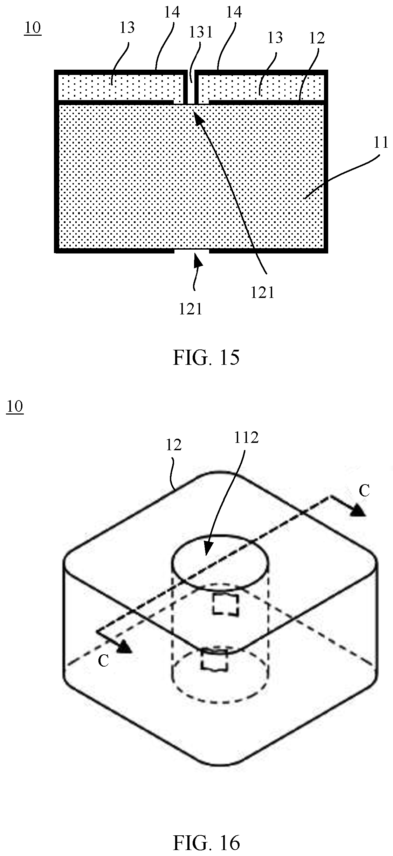

Alternatively, as shown in FIG. 15, in another example provided in this application, the conductive layer 12 includes two notches 121. One notch 121 (for example, a notch 121 on a lower side in FIG. 15) is in an exposed state. The second dielectric body 13 covers a part of the other notch 121 (for example, a notch 121 on an upper side in FIG. 15). In other words, the outer surface of the second dielectric body 13 is provided with a groove 131 extending to the notch 121.

In addition, in the foregoing example, the first dielectric body 11 is approximately a rectangular block structure, and no structure such as a groove or a through hole is arranged on a surface of the first dielectric body 11.

Alternatively, as shown in FIG. 16, in another example provided in this application, a surface of the first dielectric body 11 is provided with a through hole 112. During actual application, the first dielectric body 11 may include one through hole 112, or may include two or more through holes 112. In addition, when the first dielectric body 11 includes two or more through holes 112, all the through holes 112 may be provided on a same side surface of the first dielectric body 11, or may be provided on different side surfaces of the first dielectric body 11. In other words, one side surface of the first dielectric body 11 may not be provided with the through hole 112, or may be provided with at least one through hole 112.

For example, as shown in FIG. 10, in an example provided in this application, the first dielectric body 11 includes one through hole 112, and the notch 121 is provided in the conductive layer 12 in the through hole 112.

Specifically, the first dielectric body 11 includes one through hole 112, the conductive layer 12 includes two notches 121, and the two notches 121 are both provided in the conductive layer 12 in the through hole 112.

It should be noted that, when the first dielectric body 11 includes the through hole 112, the first dielectric body 11 may be directly replaced with the first dielectric body 11 shown in FIG. 4 and FIG. 5, to form a new resonator 10.

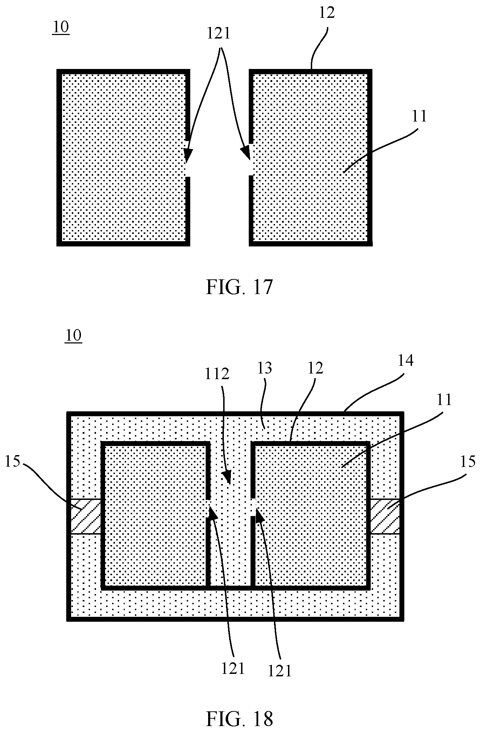

Specifically, as shown in FIG. 18, the resonator 10 includes a first dielectric body 11, a conductive layer 12, a second dielectric body 13, and a support 15. In addition, the first dielectric body 11 is a structure provided with a through hole 112.

Alternatively, based on the first dielectric body 11 provided with the through hole 112 shown in FIG. 17, structures such as the second dielectric body 13 and the shielding layer 14 may alternatively be arranged to form the new resonator 10.

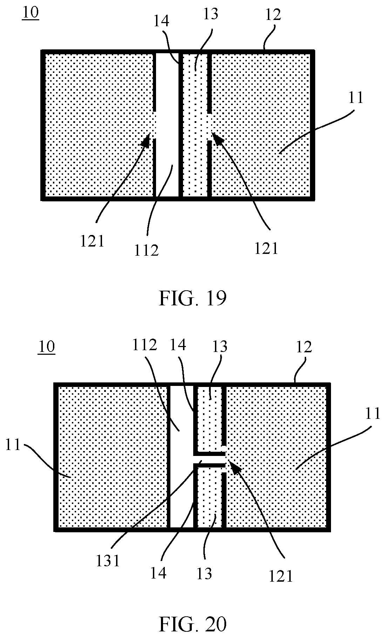

For example, as shown in FIG. 19, in another example provided in this application, the conductive layer 12 includes two notches 121, the second dielectric body 13 may completely cover one of the notches 121, and the other notch 121 may not cover the second dielectric body 13.

Alternatively, as shown in FIG. 20, in another example provided in this application, the conductive layer 12 includes one notch 121, and a part of the notch 121 may be covered by the second dielectric body 13. In other words, the second dielectric body 13 is provided with a groove 131 extending to the notch 121.

In addition, in another example, the through hole 112 may alternatively be replaced with a groove structure.

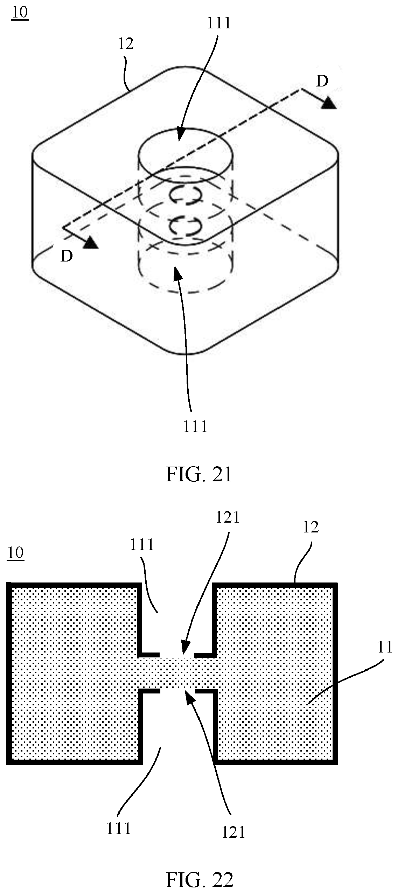

For example, as shown in FIG. 21 and FIG. 22, in an example provided in this application, the first dielectric body 11 includes two grooves 111, the conductive layer 12 includes two notches 121, and the two notches 121 are respectively provided in the conductive layer 12 in the two grooves 111.

It should be noted that, when the first dielectric body 11 includes the groove 111, the first dielectric body 11 may be directly replaced with the first dielectric body 11 shown in FIG. 4 and FIG. 5, to form the new resonator 10.

In other words, when the resonator 10 includes the foregoing support 15, the first dielectric body 11 may still include a structure such as the groove 111 or the through hole 112.

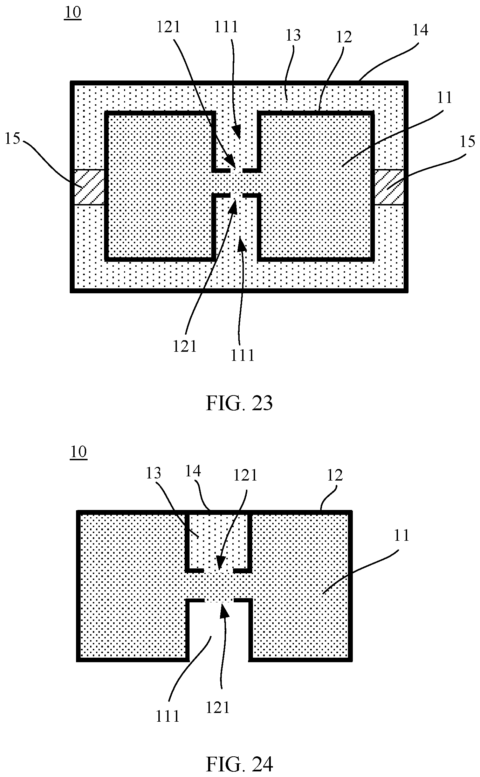

Specifically, as shown in FIG. 23, the resonator 10 includes a first dielectric body 11, a conductive layer 12, a second dielectric body 13, and a support 15. In addition, the first dielectric body 11 is a structure provided with two grooves 111.

Alternatively, based on the first dielectric body 11 provided with the groove 111 shown in FIG. 22, structures such as the second dielectric body 13 and the shielding layer 14 may alternatively be arranged to form the new resonator 10.

For example, as shown in FIG. 24, in another example provided in this application, the conductive layer 12 includes two notches 121, the second dielectric body 13 may completely cover one of the notches 121, and the other notch 121 may not cover the second dielectric body 13.

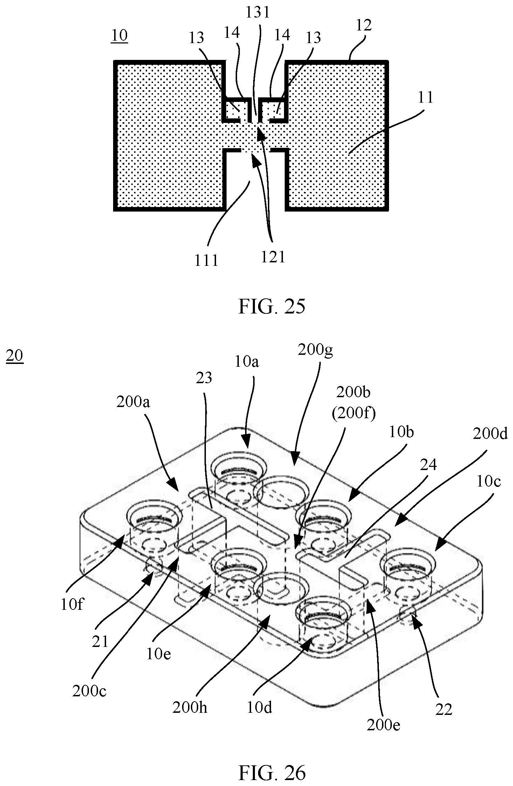

Alternatively, as shown in FIG. 25, in another example provided in this application, the conductive layer 12 includes two notches 121. One notch 121 may not cover the second dielectric body 13, and a part of the other notch 121 may be covered by the second dielectric body 13. In other words, the second dielectric body 13 is provided with a groove 131 extending to the notch 121.

Certainly, in another example, the first dielectric body 11 may alternatively include three or more through holes 112 or grooves 111. Details are not described herein.

When the groove 111 or the through hole 112 is arranged, a structure shape of the groove 111 or the through hole 112 may be variable.

For example, as shown in FIG. 17 and FIG. 22, in an example provided in this application, a cross section of the groove 111 or the through hole 112 is a circular shape, and along a depth direction of the groove 111 or the through hole 112, cross sections of the groove 111 or the through hole 112 are substantially the same.

Certainly, in another example, the cross section of the groove 111 or the through hole 112 may also be variable.

For example, the groove 111 may be specifically a step groove. Specifically, along the depth direction of the groove 111, the groove 111 may be divided into two segments with different cross sections. Alternatively, along the depth direction of the groove 111, the groove 111 may include three or more segments with different cross sections. Alternatively, in a segment along the depth direction of the groove 111, a shape of a cross section of the groove 111 may gradually increase or decrease.

In addition, when the through hole 112 is arranged, the through hole 112 may be arranged in a similar manner with reference to the structure of the foregoing groove 111. Details are not described herein.

It may be understood that, during actual application, the cross section of the first dielectric body 11 may alternatively be a circle, an ellipse, a polygon, or another irregular cylindrical structure, or may be in another shape. In addition, the first dielectric body 11 may not include the groove 111 or the through hole 112, or may include only the groove 111, or may include only the through hole 112. Alternatively, the first dielectric body 11 may include both the groove 111 and the through hole 112. During specific arrangement, the shape and the structure of the first dielectric body 11 may be properly set according to an actual situation. Details are not described herein.

It should be noted that, during actual application, when the first dielectric body 11 includes the groove 111, the notch 121 in the conductive layer 12 may be provided in the conductive layer 12 in the groove 111, or may be provided in the conductive layer 12 outside the groove 111. Alternatively, when the conductive layer 12 includes a plurality of notches 121, all the notches 121 may be provided in the conductive layer 12 in the groove 111, or at least one notch 121 may be provided in the conductive layer 12 in the groove 111.

When the first dielectric body 11 includes the through hole 112, the notch 121 in the conductive layer 12 may be provided in the conductive layer 12 in the through hole 112, or may be provided in the conductive layer 12 outside the through hole 112. Alternatively, when the conductive layer 12 includes a plurality of notches 121, all the notches 121 may be provided in the conductive layer 12 in the through hole 112, or at least one notch 121 may be provided in the conductive layer 12 in the through hole 112.

In addition, in the example provided in FIG. 23, the second dielectric body 13 is fully filled with the groove 111. However, in another example, the second dielectric body 13 may cover only the notch 121, and a remaining region in the groove 111 may not be filled with any material, or may be filled with another material.

Correspondingly, in the example provided in FIG. 18, the second dielectric body 13 is fully filled with the through hole 112. However, in another example, the second dielectric body 13 may cover only the notch 121, and a remaining region in the through hole 112 may not be filled with any material, or may be filled with another material.

During actual application, a structure shape of the first dielectric body 11 and a quantity and arrangement positions of notches 121 have high flexibility. Therefore, during actual application, coverage performed by the second dielectric body 13 on the notch 121 may be flexibly set. In addition, coverage performed by the shielding layer 14 on the second dielectric body 13 may also be flexibly set.

It should be noted that, during actual application, the first dielectric body 11, the conductive layer 12, the second dielectric body 13, and the shielding layer 14 of different structure types may be randomly combined depending on actual requirements, to form a plurality of different types of resonators 10.

In addition, during actual application, the dielectric resonator 10 may be independently used in a communication device, or the dielectric resonator 10 may be used in a filter device.

For example, as shown in FIG. 26, an embodiment of this application further provides a filter device 20. The filter device 20 is specifically a dielectric filter.

Specifically, the dielectric filter includes an input port 21, an output port 22, and the foregoing resonator. A signal may be transmitted from the input port 21 to the dielectric filter, and the signal is filtered and then output through the output port 22. The dielectric filter includes six resonators, which are respectively resonators 10a, 10b, 10c, 10d, 10e, and 10f. At least one of the resonators is the resonator provided in the present invention. The dielectric filter further includes a coupling structure, and coupling between different resonators may be implemented through the coupling structure.

For example, as shown in FIG. 26, in an example provided in this application, the dielectric filter includes six coupling structures. Three end portions of a T-shaped hole 23 respectively form a coupling structure 200a, a coupling structure 200b, and a coupling structure 200c. Three end portions of a T-shaped hole 24 respectively form a coupling structure 200d, a coupling structure 200e, and a coupling structure 200f. In addition, the dielectric filter further includes two recess-shaped coupling structures, namely, a coupling structure 200g and a coupling structure 200h. The coupling structure 200a may be configured to implement coupling between the resonator 10a and the resonator 10f, the coupling structure 200b (200f) may be configured to implement coupling between the resonator 10a and the resonator 10b, the coupling structure 200d may be configured to implement coupling between the resonator 10b and the resonator 10c, the coupling structure 200e may be configured to implement coupling between the resonator 10c and the resonator 10d, and the coupling structure 200h may be configured to implement coupling between the resonator 10d and the resonator 10e, and the coupling structure 200c may be configured to implement coupling between the resonator 10e and the resonator 10f.

It may be understood that the example provided in FIG. 26 is merely a specific example of the dielectric filter. In an actual application, a specific structure type of the dielectric filter, and a structure and a quantity of resonators included in the dielectric filter may be diversified. In addition, there may be various types of coupling structures in the dielectric filter. When the dielectric filter is arranged, a conventional manner may be used for properly arranging. Details are not described herein.

In addition, in a specific arrangement, the resonator 10 may be further applied to a multiplexer such as a duplexer and a triplexer. Alternatively, the resonator 10 may be further applied to another type of electronic component. A specific application scenario of the resonator 10 is not limited in this application.

In addition, an embodiment of this application further provides a base station. The base station includes components such as the filter device and the radio frequency circuit described in the foregoing embodiments. The radio frequency circuit is communicatively connected to the filter device, so that the filter device can perform processing such as filtering on a signal generated by the radio frequency circuit. Certainly, in another example, the base station may further include a component such as an antenna. In an actual application, a type and a quantity of electronic components included in the base station may be properly set depending on actual requirements. The base station mentioned in this application refers to an apparatus that directly communicates with user equipment through a radio channel. The base station may include a macro base station, a micro base station, a relay station, an access point, a remote radio unit, or the like in various forms. In systems using different radio access technologies, names of devices having a base station function may be different. In this application, the foregoing apparatuses that directly communicate with the user equipment through the radio channel are collectively referred to as the base station.

A specific type of the base station and a function implemented by the base station are not specifically limited in this application. In addition, the resonator 10 and the filter device provided in embodiments of this application may be further used in another apparatus or scenario in which the resonator 10 and the filter device need to be used.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

"A plurality of" in this application refers to two or more than two. "And/or" describes an association relationship between associated objects, and indicates that three relationships may exist. For example, A and/or B may indicate the following cases: Only A exists, both A and B exist, and only B exists, where A and B may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A resonator, comprising:
a first dielectric body made of a first dielectric material, wherein an outer surface of the first dielectric body is covered by a conductive layer, the conductive layer comprises at least one notch, and the at least one notch is used to adjust a resonant frequency of the resonator; and
a second dielectric body made of a second dielectric material, wherein the second dielectric body covers at least a part of a first notch, the second dielectric body is in contact with the conductive layer, and the first notch is one of the at least one notch, wherein
a relative dielectric constant of the first dielectric material is greater than a relative dielectric constant of the second dielectric material.

2. The resonator according to claim 1, wherein a dielectric strength of the second dielectric material is greater than or equal to 33 kV/cm.

3. The resonator according to claim 1 or 2, wherein the relative dielectric constant of the first dielectric material is greater than or equal to 8.

4. The resonator according to any one of claims 1 to 3, wherein the resonator further comprises a shielding layer, and the shielding layer covers at least a part of an outer surface of the second dielectric body.

5. The resonator according to claim 4, wherein the resonator further comprises a support, and the support is configured to fixedly connect the shielding layer and the conductive layer.

6. The resonator according to any one of claims 1 to 5, wherein the outer surface of the first dielectric body comprises a groove or a through hole, and the notch is provided in the groove or the through hole; and
the second dielectric body covers at least a part of the groove or the through hole.

7. The resonator according to any one of claims 1 to 6, wherein the outer surface of the second dielectric body is provided with a groove extending to the notch.

8. The resonator according to any one of claims 1 to 7, wherein the second dielectric body is at least one of a solid, a flexible body, a liquid, a gas, or a powder.

9. A filter device, comprising an input port, an output port, and at least one resonator according to any one of claims 1 to 8, wherein the at least one resonator is in signal connection with the intput port and the output port.

10. The filter device according to claim 9, wherein the filter device comprises a coupling structure and a plurality of resonators, and the plurality of resonators are coupled through the coupling structure.

11. A base station, comprising a radio frequency circuit and the filter device according to claim 9 or 10, wherein the filter device is communicatively connected to the radio frequency circuit.
